# EUROPEAN PATENT SPECIFICATION

(11) **EP 2 664 414 B1**
(45) Date of publication and mention of the grant of the patent: **02.11.2016**
(21) Application number: 13165901.3
(22) Date of filing: 30.04.2013
(51) Int. Cl.: B23Q 1/01, B23Q 1/03

(54) **Piece holder support for a machine tool or bench of a machine tool**
Stütze für einen Werkstückhalter für eine Werkzeugmaschine oder Werkbank einer Werkzeugmaschine
Pièce de support pour porte-pièce pour machine-outil ou etabli de machine outil

(30) Priority: 15.05.2012 IT BS20120083
(43) Date of publication of application: 20.11.2013
(73) Proprietor: INNSE-BERARDI S.p.A., 25127 Brescia (IT)
(72) Inventor: Camozzi, Attilio, I-25127 Brescia (IT)
(74) Representative: Pulieri, Gianluca Antonio

(56) References cited:
- EP-A1- 1 488 887
- GB-A- 907 488
- US-A- 2 231 080
- US-A- 4 816 847

## Description

The present invention relates to a piece holder support for a machine tool for performing mechanical processing, and in particular for a machine tool of large dimensions, for example of the "horizontal" type (such as a boring machine) or of the "vertical " type (such as a gantry milling machine).

In the machine tool sector, and in particular in that of machine tools of large dimensions, the need is particularly felt to perform mechanical processing with very strict tolerances, despite the dimensions and the elevated weight of the pieces being processed, often combined with an asymmetric distribution, and the considerable forces at play. Often, in fact, such processing regards mechanical parts for the nuclear industry (reservoirs, heat exchangers) or for the engine industry (foundations of marine engines). Document EP 148 8887 A1 discloses a bed of a machine tool with a structure to reduce the strain of the bed.

From EP 148 8887 A1 there is known a piece-holder support for a machine tool or bench, comprising at least one block comprising an upper wall suitable for resting the piece to be processed on or for supporting the base and a reinforcement structure comprising a plurality of cells alongside each other, peripherally delimited by septums which delimit empty compartments, wherein said septums project downwards from the upper wall, said septums and upper wall being made together in one piece by casting, and the block comprises an annular side wall, projecting from the upper wall, and at least one end wall, which closes the support or the bench on the bottom, connecting it to the side wall and the reinforcement structure connects the upper wall to the end wall and wherein the upper wall has a flat upper surface.

To ensure such strict machine tolerances, the piece holder support also needs to be particularly rigid, avoiding solutions which increase the production costs thereof excessively.

Such purpose is achieved by a piece holder support for a machine tool made according to claim 1.

The characteristics and advantages of the piece-holder support according to the present invention will be evident from the description given below, made by way of a non-limiting example, according to the appended drawings, wherein:

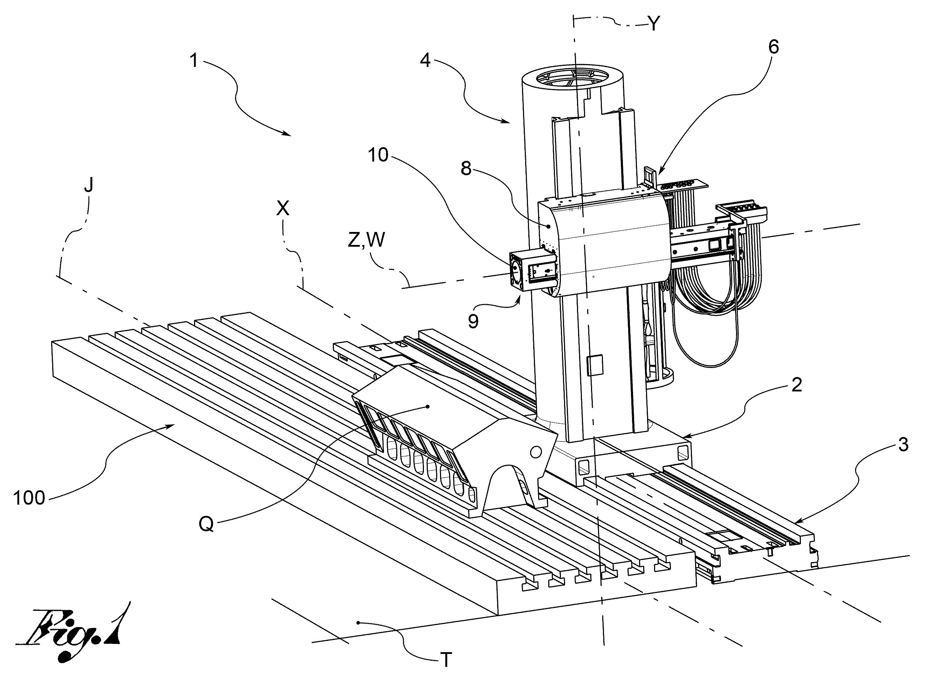

- figure 1 shows a machine tool, and in particular a boring machine, associated with a piece holder support according to the present invention;

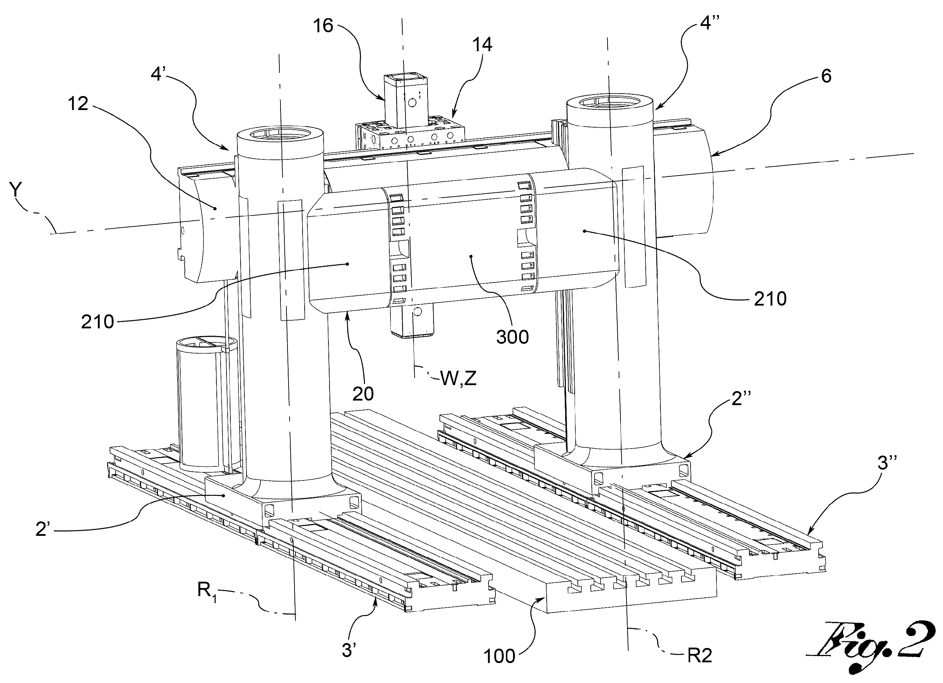

- figure 2 shows a further machine tool, and in particular a gantry milling machine, associated with the piece holder support according to the present invention;

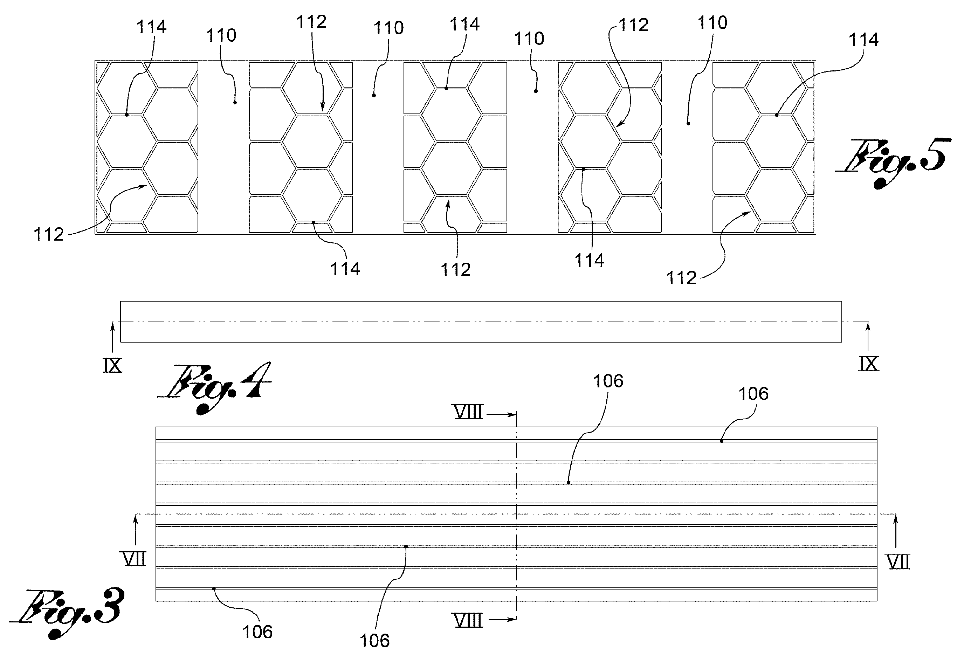

- figure 3 shows the piece-holder support seen in a plan view from above;
- figure 4 shows the piece-holder support in figure 3, in a front view;
- figure 5 shows the piece-holder support in figure 3, in a plan view from below;

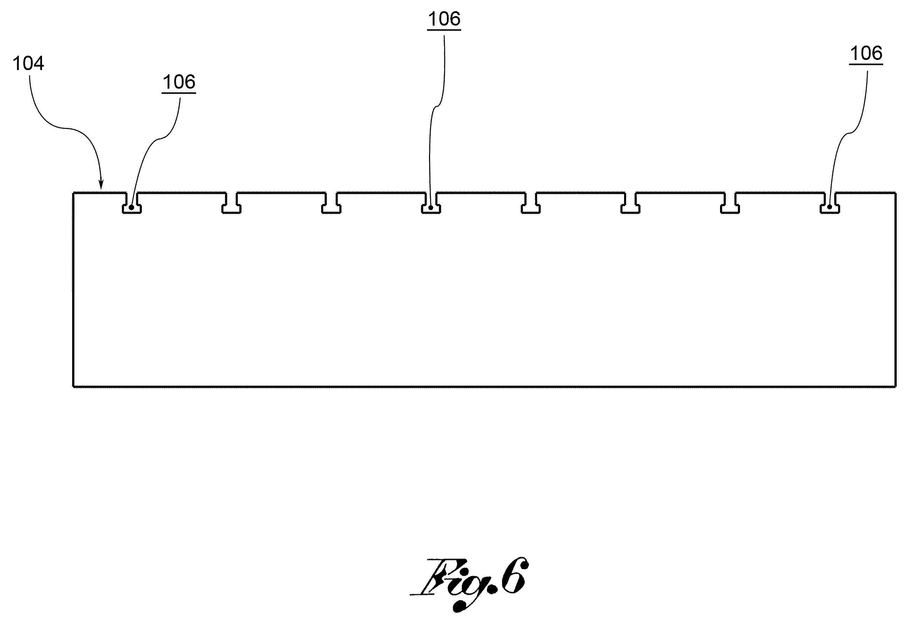

- figure 6 shows the piece-holder support in figure 3, in a side view;

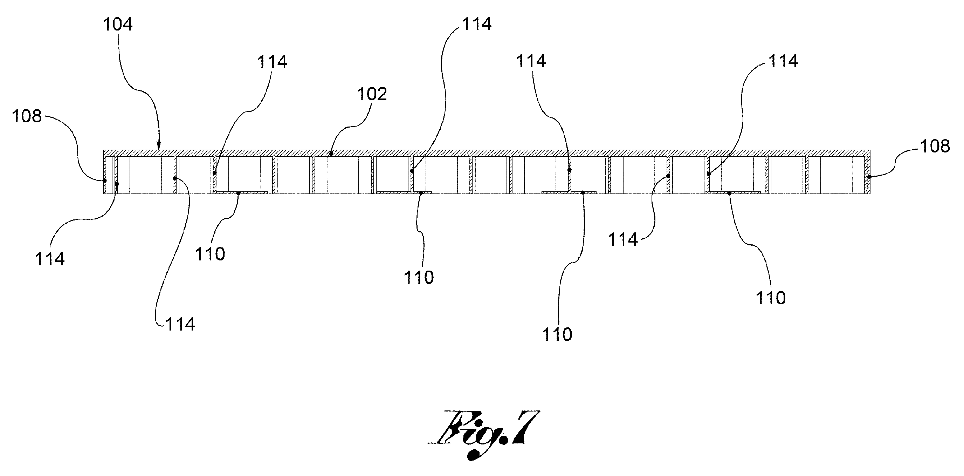

- figure 7 shows the piece-holder support in figure 3 in a cross-section view, taken according to the plane cross-section VII-VII in figure 3;

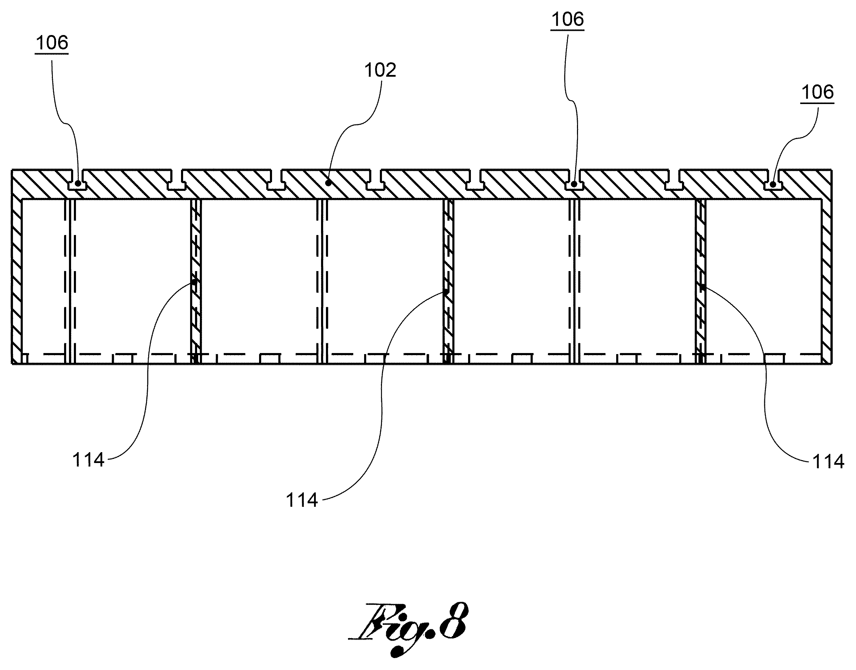

- figure 8 shows the piece-holder support in figure 3 in a cross-section view, taken according to the plane cross-section VIII-VIII in figure 3; and

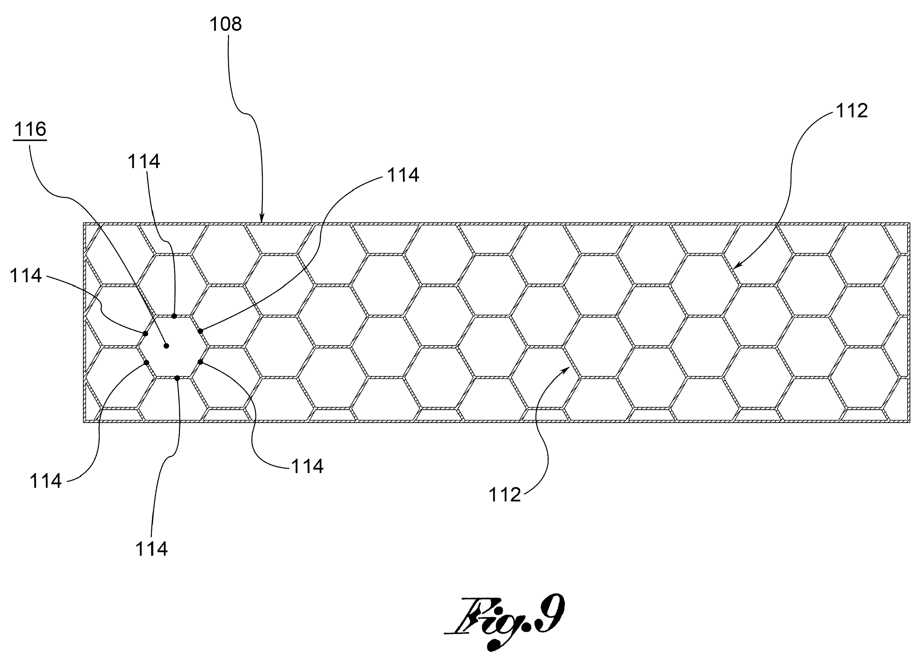

- figure 9 shows the piece-holder support in figure 3 in a cross-section view, taken according to the plane cross-section IX-IX in figure 4.

A boring machine 1 comprises a base 2, resting on a bench 3, in turn, resting on a ground plane T.

Above the base 2 a vertical upright 4 extends along a main axis Y, substantially orthogonal to the ground plane T.

The base 2, and thus the upright placed on it, can be translated upon command along the bench 3, for positioning as needed.

The base 2 is suitable for supporting the upright in a stable manner, including in translation, avoiding tipping or oscillations. Preferably, the projection of the upright along the main axis Y on the base is contained inside said base.

The machine 1 comprises a mobile group 6 supported by the upright 4; the mobile group 6 comprises a carriage 8, sliding upon command along the upright 4, so as to position itself at a desired height along the main axis Y, and a head 9, supported by the carriage 8, translating along the head axis W orthogonal to the main axis Y, that is to say substantially horizontal.

In addition, the mobile group 6 comprises at least one mandrel 10, supported by the head 9, rotatable around a working axis Z, also substantially perpendicular to the main axis Y, and preferably also translatable along said working axis Z.

Perpendicular to the main axis Y and to the working axis Z a longitudinal axis X is defined.

A piece to be machined Q is positioned opposite the mandrel 10, for example positioned on a piece-holder support 100, resting on the ground plane T, extending along a support direction J, for example parallel to the longitudinal axis X.

According to a further embodiment, the machine 1 is a gantry milling machine.

According to such variation, the machine 1 comprises two uprights 4', 4", extending along a respective main axis R1, R2, resting on respective bases 2', 2" positioned on benches 3', 3" resting on a ground plane T.

The two uprights 4', 4" are distanced along a transversal axis Y and rigidly joined to each other by means of a fixed cross-member 20, for example composed of portions of cross-member 210 and at least one intermediate spacer 300 such as to connect said portions of cross-member.

The bases 2', 2" and thus the relative uprights 4', 4" are translatable upon command along the respective benches 3' 3" for positioning as needed.

In addition, the machine 1 comprises a mobile group 6, comprising a mobile cross-member 12 which extends along said transversal axis Y.

At its ends, the cross-member 12 is engaged with the uprights 4', 4" and is translatable along the vertical axes R1,R2.

The mobile group 6 further comprises a carriage 14 sliding along the mobile cross-member 12, a head 16, supported by the carriage 14 and translatable along a head axis W, and a mandrel, supported by the head 16, rotatable around a working axis Z, substantially parallel to the vertical axes R1, R2 and preferably translatable along said working axis Z.

The piece to be worked is positioned in the span formed by the uprights 4', 4" and by the mobile cross-member 12 for example resting on the support 100, resting on the ground plane T, and extending along the support axis J, through the span of the machine.

Preferably, the component composed of the base 2, 2', 2" of the upright 4, 4', 4" and, in the variation which provides for it, of the cross-member 210, is made in one piece preferably by casting , for example in cast iron.

The piece holder support 100 is made in a single piece, preferably by casting, for example in cast iron.

The piece-holder support 100 comprises an upper wall 102, having a flat upper surface 104, destined to support the piece to be worked Q, on which channels 106 are preferably made, parallel to each other and to the direction of support.

The piece-holder support 100 further comprises an annular side wall 108, projecting from the upper wall 102,and at least one end wall 110, which closes the support on the bottom, connecting it to the side wall 108.

Preferably, a plurality of end walls 110 are provided, in the form of a band, separate from each other and distanced along the support direction.

Internally, the support 100 comprises a plurality of cells 112 peripherally delimited by septums 114 projecting from the upper wall 102, which form a honeycomb reinforcement structure.

In particular, said support comprises a plurality of septums 114, positioned and joined to each other so as to form polygonal cells, for example hexagonal, peripherally closed, which delimit empty inner compartments 116.

Preferably, the honeycomb reinforcement structure is homogeneous, that is to say the cells are evenly distributed over said upper wall 108.

Preferably, in addition, the reinforcement structure extends in height as far as the height of the side wall 108 and, at the end walls 110, connects the upper wall 102 to said end walls 110.

In the embodiments illustrated, the piece-holder support 100 is fixed. In further embodiments, the piece-holder support is translatable and/or rotatable for correct positioning in relation to the machine tool.

In addition, in yet further embodiments, the bench which supports the base in translatable manner is provided with the reinforcement structure described above.

In addition, in the embodiments illustrated, the piece-holder support or bench is made in a single piece. In further embodiments, the piece-holder support or the bench is made from blocks joined to each other, for example mechanically each block comprising an upper wall and at least one septum projecting downwards from the upper wall, said block being made in one piece.

Innovatively, the piece-holder support according to the present invention makes it possible to satisfy the precision requirements of processing spoken of, inasmuch as particularly rigid.

Advantageously, in addition, the piece-holder support according to the invention has reduced production costs and times compared to analogous components of the prior art, made by mechanical tool processing.

Advantageously, in addition, the support according to the invention has a lower weight than the analogous components of the prior art.

According to a further advantageous aspect, the support according to the invention has a lower cost for the raw material compared to that of analogous components of the prior art.

It is clear that a person skilled in the art may make modifications to the support component described above so as to satisfy contingent requirements.

For example, according to an embodiment variation, the reinforcement structure provides for a plurality of cells in the shape of an irregular polygon or polygon with some arched sides or having a circumferential shape.

According to a further embodiment, the distribution of the cells is not homogeneous, but is for example denser in the zones subject to greater working loads.

Such variants are also contained within the sphere of protection as defined by the following claims.

## Claims

1. Piece-holder support (100) for a machine tool (1) of large dimensions suitable for supporting a piece for mechanical processing, or bench (3) of a machine tool of large dimensions suitable for supporting a base (2) bearing an upright (4), comprising
at least one block comprising an upper wall (102) suitable for resting the piece to be processed on or for supporting the base (2:)
and a reinforcement structure comprising a plurality of cells (112) alongside:each other, peripherally delimited by septums (114) which delimit empty compartments (116), wherein said septums (114) project downwards from the upper wall,
said septums and upper wall being made together in one piece by casting, and
the block comprises an annular side wall (108), projecting from the upper wall (102), and at least one end wall (110), which closes the support or the bench on the bottom, connecting it to the side wall (108) and
the reinforcement structure connects the upper wall (102) to the end wall (110),
and wherein the upper wall (102) has a flat upper surface (104), on which channels (106) are made, parallel to each other and to a direction of support.

2. Support or bench according to claim 1, wherein the block is made in cast iron.

3. Support or bench according to claim 1 or 2, wherein the reinforcement structure is a honeycomb shape.

4. Support or bench according to claims 1 to 3, wherein the cells are evenly distributed all over the support or the bench.

5. Support or bench according to any of the previous claims, comprising a plurality of said blocks, joined mechanically to each other.

6. Support or bench according to claims 1 to 4, composed of a single block.

7. Support or bench according to any of the previous claims, suitable for being attached to the machine tool.

8. Support or bench according to claims 1 to 6, suitable for being translated and/or rotated in relation to the machine tool.

9. Processing apparatus comprising:
- a machine tool (1);
- a piece holder support (100) made according to any of the previous claims.

10. Processing apparatus comprising a machine tool (1) comprising:
- a bench (3) made according to claims 1 to 8;
- a base (3) and an upright (4) supported by the base (3), supported by the bench (3), said base being translatable on command.

11. Production method of a piece holder support for a machine tool or a bench of a machine tool according to claims 1 to 8, comprising the step of casting a molten metal and obtaining a portion of said support or said bench, in a single piece.

## Patentansprüche

1. Werkstückhalte-Stütze (100) für eine Werkzeugmaschine (1) großer Dimensionen, geeignet zum Stützen eines Werkstücks für die mechanische Bearbeitung, oder Werkbank (3) einer Werkzeugmaschine großer Dimensionen geeignet zum Stützen einer eine Säule (4) lagernden Basis (2), umfassend
mindestens einen Block, umfassend eine obere Wand (102), geeignet zum Auflegen des zu bearbeitenden Werkstücks auf der oder zum Stützen der Basis (2),
sowie eine Verstärkungsstruktur, umfassend eine Vielzahl Zellen (112) nebeneinander, peripher durch Trennwände (114) begrenzt, die leere Zwischenräume (116) begrenzen, wobei die Trennwände (114) nach unten von der oberen Wand vorragen, wobei die Trennwände und die obere Wand in einem Stück zusammen durch Gießen hergestellt werden, und
der Block eine ringförmige Seitenwand (108), die von der oberen Wand (102) vorragt, und mindestens eine Endwand (110) umfasst, die die Stütze oder Werkbank am unteren Rand abschließt, wobei sie diesen mit der Seitenwand (108) verbindet, und die Verstärkungsstruktur die obere Wand (102) mit der Endwand (110) verbindet,
und wobei die obere Wand (102) eine ebene obere Fläche (104) aufweist, auf der Kanäle (106) parallel zueinander und zu einer Stützrichtung gebildet sind.

2. Stütze oder Werkbank nach Anspruch 1, wobei der Block aus Gusseisen ist.

3. Stütze oder Werkbank nach Anspruch 1 oder 2, wobei die Verstärkungsstruktur eine Wabenform hat.

4. Stütze oder Werkbank nach einem der Ansprüche 1 bis 3, wobei die Zellen gleichmäßig über die gesamte Stütze oder Werkbank verteilt sind.

5. Stütze oder Werkbank nach einem der vorangehenden Ansprüche, umfassend eine Vielzahl an Blöcken, die mechanisch miteinander verbunden sind.

6. Stütze oder Werkbank nach einem der Ansprüche 1 bis 4, bestehend aus einem einzelnen Block.

7. Stütze oder Werkbank nach einem der vorangehenden Ansprüche, geeignet, um an die Werkzeugmaschine angebracht zu werden.

8. Stütze oder Werkbank nach einem der Ansprüche 1 bis 6, geeignet, um in Bezug auf die Werkzeugmaschine versetzt und/oder gedreht zu werden.

9. Verarbeitungsapparat, umfassend:
- eine Werkzeugmaschine (1);
- eine Werkstückhalte-Stütze (100), hergestellt nach einem der vorangehenden Ansprüche.

10. Verarbeitungsapparat umfassend eine Werkzeugmaschine (1), umfassend:
- eine Werkbank (3), hergestellt nach einem der Ansprüche 1 bis 8;
- eine Basis (3) und eine durch die Basis (3) gestützte Säule (4), gestützt durch die Werkbank (3), wobei die Basis auf Anweisung versetzbar ist.

11. Herstellungsverfahren für eine Werkstückhalte-Stütze für eine Werkzeugmaschine oder Werkbank einer Werkzeugmaschine nach den Ansprüchen 1 bis 8, umfassend den Schritt des Gießens geschmolzenen Metalls und Erhaltens eines Abschnitts der Stütze oder Werkbank in einem einzigen Stück.

## Revendications

1. Support (100) de porte-pièce pour une machine-outil (1) de grandes dimensions appropriée pour supporter une pièce en vue d'un traitement mécanique, ou établi (3) d'une machine-outil de grandes dimensions approprié pour supporter une base (2) portant un montant (4), comprenant
au moins un bloc comprenant une paroi supérieure (102) appropriée pour que la pièce à traiter s'y appuie ou pour supporter la base (2)
et une structure de renforcement comprenant une pluralité de cellules (112) les unes à côté des autres, délimitées de façon périphérique par des cloisons (114) qui délimitent des compartiments vides (116), dans lequel lesdites cloisons (114) s'étendant vers le bas depuis la paroi supérieure,
lesdites cloisons et ladite paroi supérieure étant fabriquées ensemble d'un seul tenant par coulage, et
le bloc comprend une paroi latérale annulaire (108), s'étendant depuis la paroi supérieure (102), et au moins une paroi d'extrémité (110), qui ferme le support ou l'établi sur le fond, le reliant à la paroi latérale (108) et la structure de renforcement relie la paroi supérieure (102) à la paroi d'extrémité (110),
et dans lequel la paroi supérieure (102) possède une surface supérieure plate (104), sur laquelle des canaux (106) sont pratiqués, parallèles les uns aux autres et à une direction de support.

2. Support ou établi selon la revendication 1, dans lequel le bloc est formé de fonte.

3. Support ou établi selon la revendication 1 ou 2, dans lequel la structure de renforcement est une forme en nids d'abeilles.

4. Support ou établi selon les revendications 1 à 3, dans lequel les cellules sont réparties de manière régulière sur tout le support ou l'établi.

5. Support ou établi selon l'une quelconque des revendications précédentes, comprenant une pluralité desdits blocs, joints mécaniquement les uns aux autres.

6. Support ou établi selon les revendications 1 à 4, composé d'un seul bloc.

7. Support ou établi selon l'une quelconque des revendications précédentes, approprié pour être attaché à la machine-outil.

8. Support ou établi selon les revendications 1 à 6, approprié pour être déplacé en translation et/ou en rotation par rapport à la machine-outil.

9. Appareil de traitement comprenant :
- une machine-outil (1) ;
- un support (100) de porte-pièce fabriqué selon l'une quelconque des revendications précédentes.

10. Appareil de traitement comprenant une machine-outil (1) comprenant :
- un établi (3) fabriqué selon les revendications 1 à 8 ;
- une base (3) et un montant (4) supporté par la base (3), supportés par l'établi (3), ladite base pouvant être déplacée en translation sur commande.

11. Procédé de production d'un support de porte-pièce pour une machine-outil ou d'un établi d'une machine-outil selon les revendications 1 à 8, comprenant l'étape de couler un métal en fusion et obtenir une portion dudit support ou dudit établi, d'un seul tenant.
